# EUROPEAN PATENT SPECIFICATION

(11) **EP 2 757 815 B1**
(45) Date of publication and mention of the grant of the patent: **20.06.2018**
(21) Application number: 12831623.9
(22) Date of filing: 17.04.2012
(51) Int. Cl.: H04W 4/12, H04W 88/02, H04N 7/18, G07C 9/00, H04L 12/24, H04L 12/26, H04W 4/00

(54) **Unlocking method for a transformer station**
Entsperrungsverfahren für eine Umspannstation
Procédé de dévérouillage pour une station de transformation

(30) Priority: 16.09.2011 CN 201110274658
(43) Date of publication of application: 23.07.2014
(73) Proprietor: Jiangsu Provincial Electric Power Company Nantong, Nantong, Jiangsu 226000 (CN)
(72) Inventor: CHEN, Jinxiang, Nantong Jiangsu 226000 (CN); FENG, Yingchun, Nantong Jiangsu 226000 (CN); ZHANG, Xiaoding, Nantong Jiangsu 226000 (CN)
(74) Representative: Gulde & Partner
(86) International application number: PCT/CN2012/074156
(87) International publication number: WO 2013/037206

(56) References cited:
- EP-A2- 1 806 703
- CN-A- 101 056 384
- CN-A- 101 983 391
- CN-A- 102 055 237
- CN-A- 102 325 309
- CN-Y- 201 213 101
- US-A1- 2004 219 903
- US-A1- 2006 063 517
- US-A1- 2010 176 919

## Description

### BACKGROUND OF THE INVENTION

### Technical Field

The present invention relates to a switching operation management method.

### Description of Related Art

The switching operation of the existing power supply departments is very complex, and is not ideal in confidential performance.

Document US 2004/0219903 A1 discloses a system for unlocking a key box, comprising a user carrying a mobile device, a key box, a server (central authority) and an approval party (e.g. management personnel), allowing the user to access the key box using his mobile device after user identification and approval by the approval party.

Document US 2010/0176919 A1 discloses a system for providing one-time access to an electronic lock device (e.g. a key box) comprising the lock device, an authorized user, a server and a "non-keyholder" with an associated hand-held device, allowing the non-keyholder to get one-time access rights to the lock device from the server upon authorization by the authorized user.

### BRIEF SUMMARY OF THE INVENTION

The present invention aims to provide a switching operation management method which is safe, convenient, and high in working efficiency.

The technical solution of the present invention is specified in the unlocking method of claim 1.

A visualized switching operation management method, which is characterized by comprising the following steps of:
(1) in case of unlocking operation, first logging in by a user name and a password to confirm the identity by a "server", and then sending the "unlocking request" information to the "server" through a "mobile phone of a worker" by the transformer station operator;
(2) after receiving the "unlocking request", sending by the "server" "unlocking request" signals successively to "mobile phones belonging to a group of management personnels with the corresponding management authority in a preset sequence identified and controlled by the "mobile phones of the workers": sending information to the first "mobile phone of management personnel", if there is no response after a certain time, sending a notice to the second "mobile phone of management personnel" by the "server", if there is response after a certain time, stopping sending signals to other "mobile phones of management personnels" by the "server", and so on.
(3) after pressing the response button of a responsive "mobile phone of management personnel", establishing a video and conversation relationship between the responsive "mobile phone of management personnel" and the "mobile phone of the worker" by a "server"; implementing one-way video to the "mobile phone of the worker" by the "mobile phone of management personnel", wherein management personnel can see the condition of workers on site, and the workers cannot see the images of the management personnel; and conducting two-way conversation.
(4) after confirming the site image and agreeing unlocking by the responsive management personnel who have authority to approve unlocking, invoking, by the unlocking function of the mobile phone of the responsive management personnel, a control panel installed on the mobile phone of the management personnel, which shows a click button with a code number for the corresponding key box which contains an unlocking key for the transformer station;
(5) pressing the click button corresponding to the unlocking key box by the management personnel who have authority to approve unlocking, sending an unlocking command to the corresponding "mobile phone of the worker" by the "server", and meanwhile, starting the Bluetooth function of the "mobile phone of the worker" accordingly;
(6) after receiving an unlocking command sent by the "mobile phone of management personnel", facing to the "key end" and pressing the Bluetooth button by on-site transformor station operator holding the "mobile phone of the worker";
(7) after receiving a Bluetooth signal by the "key end", opening the key box corresponding to the number.

The present invention is based on video monitoring technology of mobile Internet, and is a monitoring system formed by combining a mobile phone terminal and an information system; switching operation portable communication/picture recording, remote visible monitoring, electronic informationization of operation ticket/personnel safety archive, data maintenance and other information operations can be operated on a mobile phone to realize mobile officing anywhere and anytime, which is conducive to enhancing the work efficiency of the switching operation management, forming complete, comprehensive and retroactive switching operation flow records, strengthening the security of the switching operation, and effectively promoting the standardization, scientization and refinement of substation business management.

### BRIEF DESCRIPTION OF THE SEVERAL VIEWS OF THE DRAWINGS

The present invention is further described combined with the drawings and embodiments.

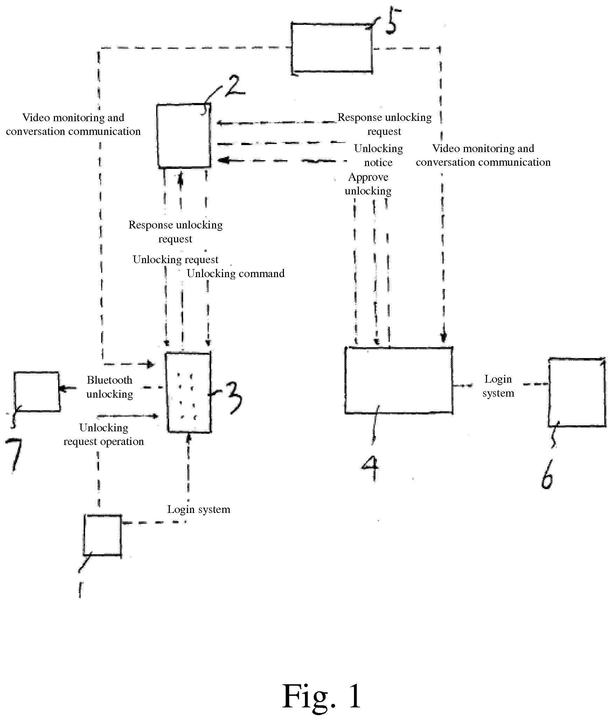

Figure 1 is a schematic diagram of the workflow of the embodiment according to the present invention.

### DETAILED DESCRIPTION OF THE INVENTION

A visualized switching operation management method, which is characterized by comprising the following steps of:
(1) in case of unlocking operation, first logging in by a user name and a password by the transformer station operator (worker) 1 to confirm the identity of the transformer station operator (worker) 1 by an application management server 2, and then sending by the transformer station operator (worker) 1 the "unlocking request" information to the "application management server" 2 through a mobile phone 3 of the transformer station operator (worker) 1;
(2) after receiving the unlocking request by the "application management server" 2, sending by the application management server 2 unlocking request signals successively to mobile phones belonging to a group of management personnels with the corresponding management authority in a preset sequence identified and controlled by the mobile phone of the transformer station operator (worker), wherein the sending performed by the application management server 2 comprises: sending by the application management server 2 the unlocking request information to a mobile phone of a first management personnel, if there is no response after a certain time from the first management personnel, sending by the application management server 2 the unlocking request information to a mobile phone of a second management personnel, and so on, until there is response after a certain time from a responsive management personnel.
(3) after pressing a response button of the mobile phone 4 of the responsive management personnel by the responsive management personnel, establishing by a streaming media video server 5 a video connection and an audio connection between the mobile phone 4 of the responsive management personnel and the mobile phone of the worker, by implementing one-way video connection between the mobile phone of the worker and the mobile phone of the responsive management personnel, wherein the responsive management personnel can see the on site images of workers on site, but the worker cannot see the on site images of the responsive management personnel; and conducting two-way audio connection.
(4) after confirming the on site images and agreeing unlocking by the responsive management personnel (leader) 6 who have authority to approve unlocking, invoking, by a unlocking function of the mobile phone of the responsive management personnel (leader) 6, a control panel installed on the mobile phone of the responsive management personnel (leader) 6, which shows a click button with a code number for the corresponding key box which contains an unlocking key for the transformer station;
(5) pressing the click button by the responsive management personnel who have authority to approve unlocking, and sending by the application management server an unlocking command to the mobile phone of the worker, and meanwhile, starting the Bluetooth function of the mobile phone of the worker automatically;
(6) after receiving the unlocking command, facing to a key end and pressing a Bluetooth button by the transformer station operator (worker) holding the mobile phone of the worker;
(7) after receiving a Bluetooth signal by the key end, opening the key box with the corresponding code number.

## Claims

1. An unlocking method for a transformer station comprising the following steps:
(1) in case of unlocking operation, first logging in by a user name and a password by a worker (1) of the transformer station through a mobile phone (3) of the worker (1) to confirm an identity of the worker (1) by an application management server (2), and then sending, by the worker (1) of the transformer station, unlocking request information to the application management server (2) through the mobile phone (3) of the worker (1);
(2) after receiving the unlocking request information, sending, by the application management server (2), the unlocking request information successively to mobile phones belonging to a group of management personnels of the corresponding management authority in a preset sequence identified and controlled by the mobile phone (3) of the worker (1), wherein said sending performed by the application management server (2) comprises: sending the unlocking request information to the mobile phone (4) of a first management personnel (6), if there is no response after a certain time, sending the unlocking request information to the mobile phone (4) of a second management personnel (6), and so on, until there is response made by a responsive management personnel (6) by pressing a response button of the mobile phone (4) of the responsive management personnel (6) ;
(3) after pressing the response button of the mobile phone (4) of the responsive management personnel (6), establishing, by a streaming media video server (5), a video connection and an audio connection between the mobile phone (4) of the responsive management personnel (6) and the mobile phone (3) of the worker (1) by implementing a one-way video connection between the mobile phone (3) of the worker (1) and the mobile phone (4) of the responsive management personnel (6) wherein the responsive management personnel (6) can see the on site images of the worker (1) but the worker (1) cannot see on site images of the responsive management personnel (6), and implementing a two-way audio connection;
(4) after confirming the on site images and agreeing unlocking by the responsive management personnel (6) who has authority to approve unlocking, invoking, by a unlocking function of the mobile phone (4) of the responsive management personnel (6), a control panel installed on the mobile phone (4) of the responsive management personnel (6), which shows a click button with a code number for the corresponding key box (7) which contains an unlocking key for the transformer station;
(5) pressing the click button by the responsive management personnel (6) who has authority to approve unlocking, and sending, by the application management server (2), an unlocking command to the mobile phone (3) of the worker (1), and meanwhile, starting a Bluetooth function of the mobile phone (3) of the worker (1) automatically;
(6) after receiving the unlocking command, facing to a key end and pressing a Bluetooth button by the worker (1) holding the mobile phone (3) of the worker (1) to send a Bluetooth signal to the key end; and
(7) after receiving the Bluetooth signal by the key end, opening the key box (7) with the corresponding code number.

## Patentansprüche

1. Entsperrungsverfahren für eine Umspannstation, umfassend die folgenden Schritte:
(1) im Falle eines Entsperrungsvorgangs, zunächst Einloggen durch einen Mitarbeiter (1) der Umspannstation mittels eines Benutzernamens und eines Passworts über ein Mobiltelefon (3) des Mitarbeiters (1), um eine Identität des Mitarbeiters (1) durch einen Anwendungsverwaltungs-Server (2) zu bestätigen, und dann Senden von Anforderungsinformationen der Entsperrung durch den Mitarbeiter (1) der Umspannstation an den Anwendungsverwaltungs-Server (2) über das Mobiltelefon (3) des Mitarbeiters (1);
(2) nach Empfangen der Anforderungsinformationen der Entsperrung, Senden der Anforderungsinformationen der Entsperrung durch den Anwendungsverwaltungs-Server (2) nacheinander an Mobiltelefone, die zu einer Gruppe von Verwaltungsmitarbeitern der entsprechenden Verwaltungsbehörde gehören, in einer vorgegebenen Reihenfolge, die durch das Mobiltelefon (3) des Mitarbeiters (1) identifiziert und gesteuert wird, wobei das Senden durch den Anwendungsverwaltungs-Server (2) umfasst: Senden der Anforderungsinformationen der Entsperrung an das Mobiltelefon (4) eines ersten Verwaltungsmitarbeiters (6), wenn nach einer bestimmten Zeit keine Antwort erfolgt, Senden der Anforderungsinformationen der Entsperrung an das Mobiltelefon (4) eines zweiten Verwaltungsmitarbeiters (6) usw., bis eine Antwort von einem ansprechbaren Verwaltungsmitarbeiter (6) durch Drücken einer Antworttaste des Mobiltelefons (4) des ansprechbaren Verwaltungsmitarbeiters (6) erfolgt;
(3) nach Drücken der Antworttaste des Mobiltelefons (4) des ansprechbaren Verwaltungsmitarbeiters (6), Herstellen einer Videoverbindung und einer Audioverbindung zwischen dem Mobiltelefon (4) des ansprechbaren Verwaltungsmitarbeiters (6) und dem Mobiltelefon (3) des Mitarbeiters (1) durch einen Stream-Medien-Videoserver (5) mittels Implementieren einer Einweg-Videoverbindung zwischen dem Mobiltelefon (3) des Mitarbeiters (1) und dem Mobiltelefon (4) des ansprechbaren Verwaltungsmitarbeiters (6), wobei der ansprechbare Verwaltungsmitarbeiter (6) die Vor-Ort-Bilder des Mitarbeiters (1) sehen kann, der Mitarbeiter (1) aber keine Vor-Ort-Bilder des ansprechbaren Verwaltungsmitarbeiters (6) sehen kann, und Implementieren einer Zweiwege-Audioverbindung;
(4) nach Bestätigen der Vor-Ort-Bilder und Zustimmen zum Entsperren durch den ansprechbaren Verwaltungsmitarbeiter (6), der befugt ist, das Entsperren zu genehmigen, Aufrufen eines auf dem Mobiltelefon (4) des ansprechbaren Verwaltungsmitarbeiters (6) installierten Bedienfelds durch eine Entsperrungsfunktion des Mobiltelefons (4) des ansprechbaren Verwaltungsmitarbeiters (6), das eine Schaltfläche mit einer Codenummer für das entsprechende Schlüsselfach (7) zeigt, das einen Entsperrungsschlüssel für die Umspannstation enthält;
(5) Drücken der Schaltfläche durch den ansprechbaren Verwaltungsmitarbeiter (6), der befugt ist, das Entsperren zu genehmigen, und Senden eines Entsperrungsbefehls durch den Anwendungsverwaltungs-Server (2) an das Mobiltelefon (3) des Mitarbeiters (1), und gleichzeitig automatisches Starten einer Bluetooth-Funktion des Mobiltelefons (3) des Mitarbeiters (1);
(6) nach Empfangen des Entsperrungsbefehls, Zuwenden zu einem Schlüsselende und Drücken einer Bluetooth-Taste durch den Mitarbeiter (1), der das Mobiltelefon (3) des Mitarbeiters (1) hält, um ein Bluetooth-Signal an das Schlüsselende zu senden; und
(7) nach Empfangen des Bluetooth-Signals durch das Schlüsselende, Öffnen des Schlüsselfachs (7) mit der entsprechenden Codenummer.

## Revendications

1. Procédé de déverrouillage pour une station de transformation, comprenant les étapes suivantes :
(1) en cas d'opération de déverrouillage, ouverture préalable de session avec un nom d'utilisateur et un mot de passe par un opérateur (1) de la station de transformation par l'intermédiaire d'un téléphone mobile (3) de l'opérateur (1), pour confirmer l'identité de l'opérateur (1) par un serveur de gestion d'applications (2), puis envoi, par l'opérateur (1) de la station de transformation, d'une information de demande de déverrouillage au serveur de gestion d'applications (2) par l'intermédiaire du téléphone mobile (3) de l'opérateur (1) ;
(2) après réception de l'information de demande de déverrouillage, envoi, par le serveur de gestion d'applications (2), de l'information de demande de déverrouillage successivement à des téléphones mobiles appartenant à un groupe de cadres de direction de l'instance gestionnaire correspondante, en une séquence prédéfinie identifiée et commandée par le téléphone mobile (3) de l'opérateur (1), ledit envoi exécuté par le serveur de gestion d'applications (2) comprenant : l'envoi de l'information de demande de déverrouillage au téléphone mobile (4) d'un premier cadre de direction (6), et, si aucune réponse n'est présentée après un certain délai, envoi de l'information de demande de déverrouillage au téléphone mobile (4) d'un deuxième cadre de direction (6), et ainsi de suite, jusqu'à ce qu'une réponse soi émise par un cadre de direction réactif (6) par activation d'un bouton de réponse du téléphone mobile (4) du cadre de direction réactif (6) ;
(3) après activation du bouton de réponse du téléphone mobile (4) du cadre de direction réactif (6), établissement, par un serveur de vidéos en continu (5), d'une connexion vidéo et d'une connexion audio entre le téléphone mobile (4) du cadre de direction réactif (6) et le téléphone mobile (3) de l'opérateur (1) par implémentation d'une connexion vidéo unilatérale entre le téléphone mobile (3) de l'opérateur (1) et le téléphone mobile (4) du cadre de direction réactif (6), le cadre de direction réactif (6) pouvant visualiser des images sur site de l'opérateur (1) alors que l'opérateur (1) ne peut pas visualiser des images sur site du cadre de direction réactif (6), et par implémentation d'une connexion audio bilatérale ;
(4) après confirmation des images sur site et approbation du déverrouillage par le cadre de direction réactif (6) ayant autorité pour approuver le déverrouillage, appel, par une fonction de déverrouillage du téléphone mobile (4) du cadre de direction réactif (6), d'un panneau de commande installé sur le téléphone mobile (4) du cadre de direction réactif (6), lequel représente un bouton avec un numéro de code pour la boîte à clé (7) correspondante contenant une clé de déverrouillage pour la station de transformation ;
(5) activation du bouton par le cadre de direction réactif (6) ayant autorité pour approuver le déverrouillage, et envoi, par le serveur de gestion d'applications (2), d'une instruction de déverrouillage au téléphone mobile (3) de l'opérateur (1), une fonction Bluetooth du téléphone mobile (3) de l'opérateur (1) étant automatiquement initialisée pendant ce temps ;
(6) après réception de l'instruction de déverrouillage, placement devant une extrémité de clé et activation d'un bouton Bluetooth par l'opérateur (1) détenant le téléphone mobile (3) de l'opérateur (1) pour l'envoi d'un signal Bluetooth à l'extrémité de clé ; et
(7) après réception du signal Bluetooth par l'extrémité de clé, ouverture de la boîte à clé (7) avec le numéro de code correspondant.
